# EUROPEAN PATENT APPLICATION

(11) **EP 2 202 512 A2**
(43) Date of publication of application: **30.06.2010**
(21) Application number: 08832554.3
(22) Date of filing: 21.07.2008
(51) Int. Cl.: G01N 30/06

(54) **METHOD FOR QUALITATIVELY AND QUANTITATIVELY DETERMINING ORGANIC PRECIOUS METAL COMPOUNDS IN DIFFERENT COMPOSITION ROCKS**

(30) Priority: 18.09.2007 RU 2007134762
(71) Applicant: Zakrytoe Akcionernoe Obshestvo "Uralkaliy-technologiya", Permsky krai 618426 (RU)
(72) Inventor: SMETANNIKOV, Andrei Filippovich, Perm 614061 (RU); SEREBRYANIY, Boris Lvovich, Moscow 117556 (RU); KRASNOSHTEIN, Arkadiy Evgenievich, Perm 614039 (RU)
(74) Representative: Hatzmann, Martin
(86) International application number: PCT/RU2008/000478
(87) International publication number: WO 2009/038496

(57) **Abstract**

The invention relates to analytical chemistry and can be used for quantitatively and qualitatively determining the content of organic Au, Pt and Pd compounds present in different composition rocks and concentrated in organic constituent thereof. The inventive method consists in burdering a tested material with Na or K chloride, carrying out the assay melting thereof in a mixture with litharage, dissolving the thus obtained metal bead in nitrohydrochlotic acid and in analyzing the diluted solution by means of inductively coupled plasma atomic absorption or atomic emission methods. Said method makes it possible to maximally preserve the analyzed components. The traditional sample preparation methods cause the loss of the main portion of the analyzed Au, Pt and Pd which are present in the form of organic compounds.

## Description

This invention falls within the realms of analytical chemistry and may be applied to make quality and quantity measurement of noble [precious] metals, namely, Au, Pt and Pd, present in various types of rocks (including salt-containing rocks) and able to concentrate as organic compounds.

There are some recognized [known] methods devised by the TZLAV GEOKHI, such as "Precious Metals. Determination of Their Content in Natural Subjects by Method of Electrothermic Atomic Absorption" (published in 1997), "Precious Metals. Determination of Their Content by Method of Atomic Emission with the Use of Plasma Fixed by Induction" (AES-ISP) and Method of Atomic Absorption (AAS)" (published in 1997), and methods devised by the TZNIGRI, such as "Atomic Absorption Assaying of Various Rocks Containing Precious Metals", as well as the following methods: MA 117-2 IATZ-45-2000 (IRGIREDMET) "Method for Measuring Fractions of Total Mass of Pt, Pd and Ro Present in Samples of Pt-Containing Rocks and Products of Their Processing by Atomic Absorption Assaying", MA 117-2 IATZ043-2000 (IRGIREDMET) "Method for Measuring Fractions of Total Mass of Au and Ag Present in Samples of Au-Containing Rocks and Products of Their Processing by Atomic Absorption Assaying" and NSAM 482 "Method for Measuring Content of Au in Lean Placers, Gravitation Tailings and Products of Processing of Sand-Gravel Mixtures by Atomic Absorption Assaying".

Preparation (decomposition and "mineralization") of samples for the above methods involves the following operations:

To make analysis with the use of the AES-ISP and AAS methods it is necessary to put a previously weighed one-gram-sample in fluoroplastic sleeve [cup] (150 ml) of titanium autoclave and pour 4 ml of nitric acid (HNO3) + 4 ml of hydrochloric acid (HCl) + 4 ml of hydrogen peroxide (H2O2) into the sample. Leave the mixture for 4 hours at 220oC. Then transfer the contents of the sleeve [cup] into a glass-carbon cup, add 15 ml of hydrofluoric acid (HF), place the mixture on hot plate (stove) and evaporate to dryness. To remove vapours of fluorine add 5 ml of hydrochloric acid (HCl), evaporate the mixture to dryness and mix in 15 ml of aqua regia in the ratio of 1 HN03 to 3 HCl. Evaporate the mixture to wet [moist] salts, add 5 ml of hydrochloric acid (HCl) and evaporate again to wet [moist] salts so that to remove all vapours of nitrogen dioxide (N02). Transfer the contents to solution using binormal hydrochloric acid (2N HCl). Next step is extraction (methyl isobutyl ketone) to determine the content of gold (Au) or sorption (Polyorgs-IV sorbent) to determine the content of platinum (Pt) and palladium (Pd).

To make analysis with the use of atomic absorption assaying mix a previously weighed sample (50-200 g) with litharge (lead oxide) and subject the mixture to assay fusion (smelting) at 950-1200oC. While reducing to metal the litharge (lead oxide) collects precious metals to form a lead bullion ingot. At the next stage heat the lead bullion in "font" - a vessel made of porous refractory (magnesite, bone meal) - up to 900-1200°C. Once lead has been absorbed by the porous refractory it leaves entrapped cold shot - micro-ingot containing all precious metals that were present in the material being analyzed - on the surface of the font. Then dissolve the entrapped cold shot in aqua regia (mixture of HN03 and HCl) and make atomic-absorption analysis of dilute acid solution to determine the whole range of precious metals, that is to say, this method uses assay fusion (smelting) and preparation of entrapped cold shot in order to concentrate noble [precious] metals.

Results of analysis of samples containing compounds of Au, Pt and Pd carried out with preparation (decomposition) by the above methods are unreliable for the following reasons:
1) in the course of decomposition by traditional methods organic compounds of Au, Pt and Pd are lost (gone to sublimates, etc.), and are not present in the solution being analyzed;
2) sample components (compounding materials) being analyzed are nonuniformly distributed;
3) organic compounds of Au, Pt and Pd are being modified.

This invention settles the issue of preparation of samples for analysis of organic compounds of Au, Pt and Pd present in various types of rocks and guarantees very reliable results.

Precious metals present in salt-containing rocks of Verkhnekamskoje field are represented by organic compounds of Au, Pt and Pd incorporated into water-insoluble residue of salt-containing rocks, and in case of ore processing - into water-insoluble residue of argillo-saline waste (slurry). When water-insoluble residue is separated from salt (saline) matrix, structure and composition of its organic component are modified which is manifested as blocking of organic compounds of Au, Pt and Pd, their aggregation, modification of composition and rearrangement in water-insoluble residue of salt-containing rock. As a consequence the sampling method and correct analysis (assaying) of precious metals in water-insoluble residue of salt-containing rocks and products of their processing do not work properly.

Depending on the type of rock (black shale, cupreous sandstones, etc.) precious metals may be fixed to organic substance comprising from 0.5 to 1.5% of the rock. As a rule, correct analysis to determine the content of precious metals in the rocks is unfeasible by virtue of the fact that upon decomposition of sample (preparation of material for analysis) the most part of metals, especially Pt and Pd, is lost.

In view of the above-mentioned peculiarities of material being analyzed we have worked out the concept of analysis of such compounds. The domain bulk of its subject matter is method of preparation of sample to analysis. Traditional method of preparation of samples with chloride matrix involves, first of all, separation of matrix and transfer of water-insoluble residue to solution. In case of salt-containing rocks, all sample material is transferred to solution. In our case the initial (reference) sample is mixed with potassium chloride (K) or sodium chloride (Na) in the ratio of 5 to 95. To put it otherwise, the sample material amounts to 5%, while potassium chloride (K) or sodium chloride (Na) makes up 95%.

This preparation method is closely related to the particular analysis technique - atomic-absorption assaying. The heart of the method lies with preliminary mixing of material being analyzed with litharge (lead oxide) and its assay fusion (at 900-1200°C) during which lead while being reduced causes concentration of precious metals [collects precious metals]. This process relates to assay concentration. The obtained ingot (lead bullion) is subjected to cupellation (heating in font made of porous refractory - magnesite) as a result of which the lead is absorbed by pores in the cupel material and leaves entrapped cold shot (micro-ingot) in which all precious metals are concentrated on the surface. The entrapped cold shot is dissolved in strong aqua regia after which dilute solution is analyzed by atomic-absorption method.

In our case the material being analyzed which contains organic compounds of precious metals is mixed with potassium chloride (K) or sodium chloride (Na) in the ratio of 5 to 95, and only after that the charge is mixed with litharge (lead oxide). During the assay fusion of the mixture concentration of precious metals occurs. Chloride matrix along with annealing of organic compounds prevents the precious metal from being lost to sublimates serving as a screen [shield]. That is to say, the key principle of this method is heating of material to high temperature in the presence of chloride matrix and concentrating agent which part is played by litharge. Then the obtained ingot (lead bullion) is subjected to heating in font, and the entrapped cold shot is dissolved in aqua regia and analyzed by atomic-absorption method or by method of atomic emission with the use of plasma fixed by induction. This method of sample preparation together with assay concentration in the presence of chloride matrix makes it possible to preserve maximum of precious metals (Au, Pt, Pd) present as organic compounds. Traditional methods of sample preparation which involve decomposition of samples and their transfer to solution cause loss of the most part of components being analyzed.

To get the above technical result the sample is subjected to assay fusion with litharge mixed with potassium chloride (K) or sodium chloride (Na) in the ratio of 5 to 95.

The features that distinguish this method from the above-mentioned and most similar one, is the fact that the sample is subjected to assay fusion with litharge mixed with potassium chloride (K) or sodium chloride (Na) in the ratio of 5 to 95.

Our method suggests that the analysis should take into consideration the amount of material being analysed which comprises 5%, while the remaining 95% fall on mixture [blend] of potassium chloride (K) or sodium chloride (Na) and litharge within the temperature range from 950 to 1200°C.

Nanoparticles of organic compounds of Au, Pt and Pd are annealed, and the metals in question are concentrated as lead bullion which, upon cupellation, is transformed to entrapped cold shot. Then the shot is dissolved in aqua regia and subjected to analysis by traditional atomic spectrum methods. In other words, in the course of sample preparation all precious metals are transferred to solution being analyzed without any losses.

To illustrate: after atomic-absorption assaying of salt-containing rock (marking clay) containing 5-10% of sodium chloride (NaCl) the content of precious metals (Au, Pt, Pd) is lower than detection threshold (refer to Table 1, top part), whereas after the same analysis of sample mixed with sodium chloride in the ratio of 5 to 95, the result increases by a factor of 10² (refer to Table 1, bottom part).

**Table 1**

| Samples | Content, g/ton | | | |
|---|---|---|---|---|
| | Au | Pt | Pd | Total |
| Marking clays (MC), reference | | | | |
| Reference marking clay (water-insoluble residue - 95%, NaCl- 5%0 | 0.05 | 0.01 | 0.01 | |

| Marking clays mixed with NaCl | | | | |
|---|---|---|---|---|
| Mixture (NaCl- 95%, marking clay - 5%) | 0.012 | 0.084 | 0.31 | |

| Marking clays | | | | |
|---|---|---|---|---|
| In terms of reference marking clay (water-insoluble residue - 95%) | 0.3 | 0.63 | 3.4 | 4.33 |

**Table 2**

| N o | Sample | Previously weighed sample, g | Content, g/ton | | | |
|---|---|---|---|---|---|---|
| | | | Au | Pt | Pd | Total |
| 1 | Rock salt [halite], lean | 50 | <0.01 | 0.036 | 0.092 | |
| 2 | MC-7 | 50 | 0.016 0.32 | 0.076 0.8 | 0.19 2.0 | 3.1 |
| 3 | MC-8 | 50 | 0.030 0.6 | 0.070 0.68 | 0.22 2.6 | 3.9 |
| 4 | MC-10 | 50 | 0.026 0.52 | 0.067 0.31 | 0.20 2.2 | 3.1 |
| 5 | MC-13 | 50 | 0.035 0.7 | 0.074 0.38 | 0.46 7.2 | 8.3 |
| 6 | MC-14 | 50 | 0.030 0.6 | 0.078 0.42 | 0.31 4.4 | 5.4 |
| 7 | MC-15 | 50 | 0.12 2.4 | 0.046 0.2 | 0.22 2.6 | 5.2 |

Test of this method made with the use of 7 samples of marking clay (MC) taken within the range from 200 to 400 m (Table 2) has strengthened it.
Notes: Sample 1 - blank (rock salt)

Samples 2-8 - furrow samples of marking clay. The numerator represents the result of analysis of mixed sample (marking clay mixed with rock salt in the ratio 5 to 95), and the denominator represent the result of analysis in terms of reference marking clay.

**Table 3**

| Samples | Content, g/ton | | | |
|---|---|---|---|---|
| | Au | Pt | Pd | Total |
| Reference rocks (black shale) | | | | |
| T/a 3508, reference | < 0.05 | 0.07 3 | 0.23 | 0.303 |
| T/a 4201, reference | < 0.05 | 0.16 | 0.24 | 0.4 |

| Rocks mixed with NaCl | | | | |
|---|---|---|---|---|
| T/a 3508 + rock salt (in the ratio 5:95) | < 0.05 | 0.02 8 | 0.089 | - |
| T/a 4201 + rock salt (in the ratio 5:95) | <0.05 | 0.04 6 | 0.078 | - |

| In terms of reference rock | | | | |
|---|---|---|---|---|
| T/a 3508 in terms of reference rock (100% of reference rock) | - | 0.34 | 0.94 | 1.28 |
| T/a 4201 in terms of reference rock (100% of reference rock) | - | 0.7 | 0.72 | 1.42 |

Analysis of samples of salt-free rocks with high content of organic compounds of precious metals (refer to Table 3) has revealed the same pattern (relationship), that is to say, the invention (sample preparation method) may be applied to all natural subjects containing precious metals, especially to platinoides in the form of organic compounds.

Thus, in view of the obtained results methodological approach to determination of content of Au, Pt and Pd present in various rocks as organic compounds has been changed.

## Claims

1. The method of quantity and quality measurement of organic compounds of noble [precious] metals containing in various types of rocks that involves previous weighing of material being analyzed, assay fusion of its mixture with litharge, dissolution of entrapped cold shot in aqua regia and atomic-absorption analysis of acid solution distinguishing from other methods by assay fusion of the sample together with litharge mixed with potassium chloride (K) or sodium chloride (Na) in the ratio of 5 to 95.
